# EUROPEAN PATENT SPECIFICATION

(11) **EP 1 707 749 B1**
(45) Date of publication and mention of the grant of the patent: **22.02.2012**
(21) Application number: 06250466.7
(22) Date of filing: 27.01.2006
(51) Int. Cl.: F01D 11/08, F01D 25/24, F01D 9/04

(54) **Blade outer seal assembly**
Außendichtungsanordnung für eine Turbinenschaufel
Ensemble de joints externes d'aubes de turbine

(30) Priority: 28.03.2005 US 91204; 28.03.2005 US 91172
(43) Date of publication of application: 04.10.2006
(73) Proprietor: United Technologies Corporation, Hartford, CT 06101 (US)
(72) Inventor: Thompson, Ralph J., Wells, ME 04090-5522 (US); Tholen, Susan M., Kennebunk, ME 04043-6037 (US)
(74) Representative: Leckey, David Herbert

(56) References cited:
- EP-A1- 0 770 761
- EP-A2- 1 079 076
- WO-A1-99/30009

## Description

### Field of the Invention

The invention relates generally to jet engines and, more particularly to a blade outer air seal assembly for use in the turbine section of a jet engine.

### Background of the Invention

In a jet engine, wherein a turbine rotor is mounted for rotation within an engine casing, it is common to provide a blade outer air seal (BOAS) between the casing and the turbine rotor so as to prevent or reduce leakage therebetween. Typically, the BOAS is mounted in the casing by way of a bolted flange on the inner periphery of the casing. The purpose of the bolted flange is to accurately and reliably locate the BOAS and to provide effective sealing against the leakage of BOAS cooling air which is circulated on the radially outer side of the BOAS to cool and purge the BOAS.

Such a bolted flange assembly is relatively heavy, and ongoing efforts to reduce the weight of a jet engine favor the elimination of such a bolted flange. If the bolted flange is eliminated, however, an alternative approach to securing the BOAS in place, and for sealing against the leakage of cooling air, must be provided.

WO99/30009 discloses an apparatus having the features of the preamble of claim 1. EP1079076 discloses a shroud assembly having a C-clip retainer.

### Summary of the Invention

In accordance with one aspect of the invention, there is provided an apparatus as set forth in claim 1.

In the described embodiment, provision is made for locating and securing the BOAS of a jet engine turbine rotor without the use of a bolted flange in the engine casing.

In the embodiment described, the inner periphery of the engine casing is so shaped and includes both radially and axially extending flanges which matingly receive a specially designed locking and retention assembly, which fixes the BOAS in its installed position and also provides for sealing of its rear periphery.

In the described embodiment, the sealing and retention assembly includes a plurality of annular segments that are angle-shaped in cross section with one arm of the angle-shaped segment axially engaging a portion of the BOAS and the other arm being so disposed and engaged with the flanges of the casing as to allow the angle-shaped segment to be rotated about a fulcrum, and by such movement causing a surface of the angle-shaped segment to conformingly engage a mating surface on the casing so as to thereby provide a sealing function while positioning the BOAS.

In the drawings as hereinafter described, a preferred embodiment is depicted; however, various other modifications and alternate constructions can be made thereto without departing from the scope of the invention.

### Brief Description of the Drawings

FIG. 1 is a partial side elevation sectional view illustrating the blade outer seal assembly in accordance with the present invention.
FIG. 2 is a perspective view of a radial segment thereof as shown from the inner side.
FIG. 3 is a perspective view of a radial segment thereof as shown from the outer side.
FIG. 4 is a perspective view of a component of the assembly.
FIG. 5 is a top view illustrating the split ring retainer employed;
FIG. 6 is an enlarged partial view showing the split section of the ring;
FIG. 7 is an enlarged partial view showing the ring detent mechanism and a section of the ring on each side of detent mechanism;
FIG. 8 is a sectional view taken along lines 8-8 in Fig. 7;
FIG. 9 is a sectional view taken along lines 9-9 in Fig. 5;
FIG. 10 is a sectional view taken along lines 10-10 in Fig. 5;
FIG. 11 is an enlarged partial perspective view showing the detent mechanism;
FIG. 12 is an enlarged partial view in perspective showing a raised lug on the split ring in engagement with a rib located upon a locking key segment;
FIG. 13 is an enlarged partial view in perspective showing the split section of the ring and a portion of the outer air seal of a turbine rotor stage; and
FIG. 14 is an enlarged partial view in perspective showing the detent mechanism.

### Detailed Description of the Invention

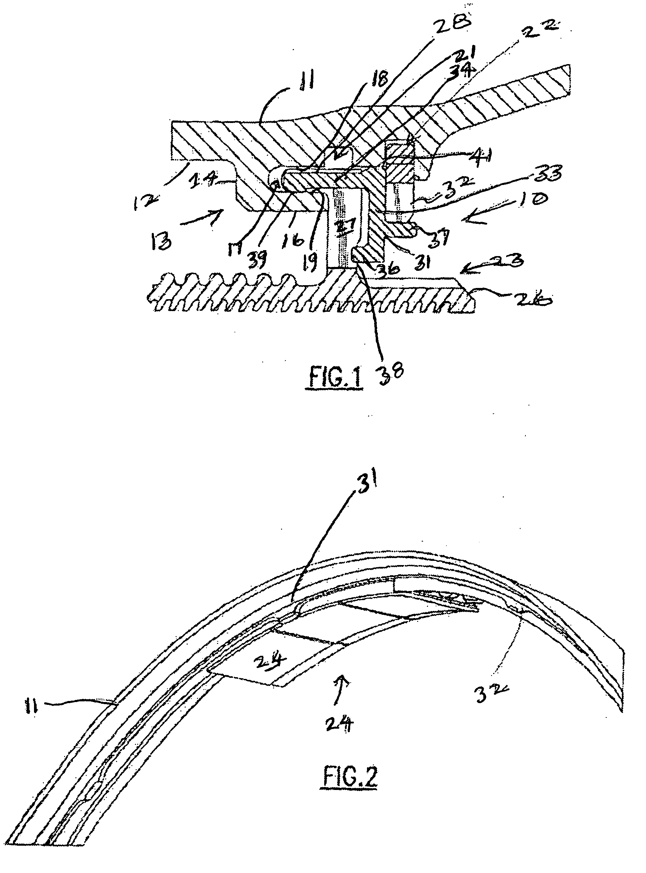

Referring now to Fig. 1, an annular outer air seal assembly is shown generally at 10 as applied to an inner surface of a turbine casing 11. As an integral part of the inner surface 12 there is a circumferentially disposed mounting flange 13 having a radially inwardly extending leg 14 and an axially extending leg 16. The mounting flange 13 forms a circumferential groove 17 between an inner surface 18 of the turbine casing 11 and an outer surface 19 of the axially extending leg 16. Also formed on the inner side of the turbine casing 11 are the circumferential slots 21 and 22.

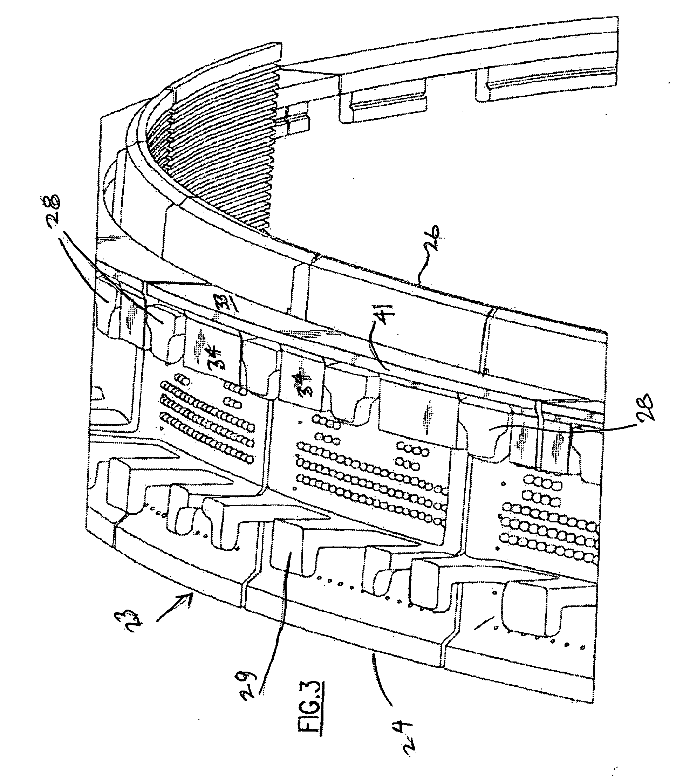

The above described structure within the turbine casing is adapted to support a blade outer air seal (BOAS) shown at 23 in Fig. 1. As will be seen in Figs. 1-3, the BOAS comprises a plurality of circumferentially spaced, interconnected segments 24 having a generally axially extending seal portion 26, a plurality of radially disposed arms 27 (See Fig. 1) and a plurality of hanger elements 28. The arms 27 are hidden in Fig. 3 but are shown in Fig. 1, whereas the hanger elements 28 are hidden in Fig. 1, but shown in Fig. 3. The hanger elements 28 fit into the circumferential groove 17 and are supported by the axially extending leg 16.

As shown in Fig. 3, in addition to the arms 27 and hanger elements 28, the BOAS segments 24 have other support elements 29 disposed toward their upstream end which are mounted in appropriate structure on the inner side of the turbine casing 11 but not shown in Fig. 1.

Although the axially extending leg 16, in cooperation with the hanger elements 28, acts to position and support the BOAS segments 24 in the radial direction, it is also necessary to locate and fix these seal elements in the axial direction. This is accomplished by the use of an angle-shaped seal 31 and a split retention ring 32. The angle-shaped seal 31 is dual purpose in that it provides, in conjunction with the split retention ring 32, a physical locating device for the BOAS, as well as providing sealing for the higher pressure air outboard of the BOAS which is used to cool and purge the BOAS.

Referring again to Fig. 1 and Fig. 3, the angle-shaped seal 31 comprises a radially disposed arcuate-shaped panel 33 with a plurality of axially extending hooks 34. As shown in Fig. 3, the hooks 34 fit circumferentially between the hanger elements 28 of the BOAS, with both being disposed within the groove17 as shown in Fig. 1. For purposes of assembly, the BOAS segments 24 are first assembled from the rear of the engine, with the hanger elements 28 sliding into the circumferential groove 17, and then the multiple arc-shaped angle-shaped seal segments 31 are slid behind and hook into the same groove 17 to either side of the BOAS hanger elements 28.

Also projecting from the radially disposed arcuate-shaped panels 33 are forwardly extending flanges 36 and rearwardly extending flanges or ribs 37. The ends of the forwardly extending flanges 36 fit into slots 38 on the rear side of the arm elements 27 as shown in Fig. 1. It is these forwardly extending flanges 36 which bear against the slots 38 to hold the BOAS in its axial position. The retention ring 32 then interacts with the rearwardly extending flanges 37 and the circumferential slot 22 to lock the assembly in its position.

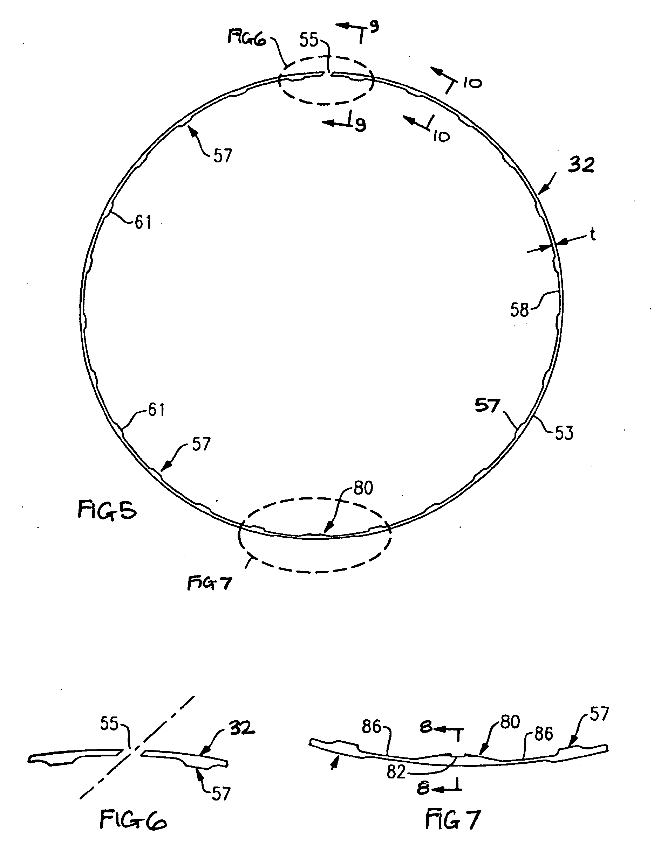

A preferred embodiment of the locking arrangement is described with reference to Figures 5-14, and will be described further below.

In addition to the function of the forwardly extending flange 36 acting to bias the BOAS forwardly, an advantage is taken of the tendency for the BOAS arm element 27 to be rotated as the BOAS is biased rearwardly because of the pressure differential across the BOAS, to aid in the sealing function. That is, as the BOAS is moved rearwardly against the forwardly extending flange 36, the angle-shaped seal 31 is rotated about the fulcrum that exists between the leg outer surface 19 and a pad 39 on the axially extending hook 34. With the rotation of the angle-shaped seal, a radially outer surface 41 of the arcuate-shaped panel 33 is biased against the inner surface 18 of the casing 11 to provide a sealing relationship that prevents the leakage of cooling air rearwardly. Thus, with the engagement of these two surfaces and those of the forwardly extending flanges 36 in the slot 38, a seal is created to prevent the rearward flow of the cooling air.

One of the noteworthy concepts of the above described design is the relatively long axially extending hooks 34. Due to tolerance stack up, other retention schemes considered would not provide any consistent axial stop location for the BOAS. For example, a radial segment fitting into the case but extending inwardly enough to provide the seal could have an axial position tolerance of 0.002 inches (0.05 mm) with the case slot. With the long arm, this distance could translate into a substantial amplification of the tolerance on the piece, allowing the BOAS to slide aft by a significantly greater amount. With the current design however, any aft motion of the BOAS produces a tilt on the angle-shaped seal. With a similar 0.002 inch (0.05 mm) tolerance on the axially positioning of the axially extending hooks 34, the BOAS can slide aft by no more than 0.002 inches (0.05 mm). Accordingly, tight control of the tolerance in the radial distance between the casing inner surface 18 and the axially extending leg outer surface 19 is critical to ensure a consistent preload of the L-seal. Further, the effect of segment to segment variations in part length is also minimized with this design.

In addition to the length of the axially extending hooks 34, the radial height of the panel 33 is important. This radial height is preferably set to provide a sealing surface against the inboard portion of the BOAS and for ease of assembly.

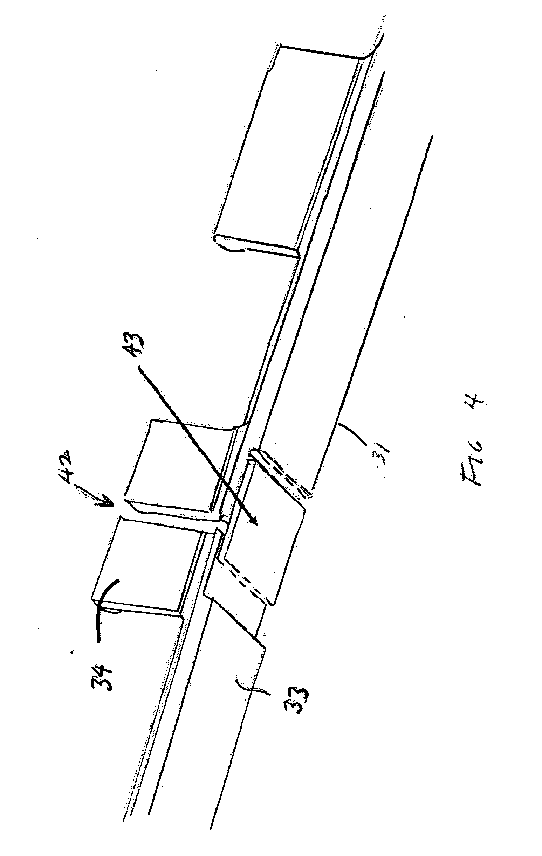

Referring now to Fig. 4, there are a pair of adjacent angle-shaped segments 31 and, as will be seen, there is a gap 42 that exists both between the adjacent axially extending hooks 34 and between the adjacent arcuate-shaped panels 33. With respect to the gap between the adjacent arcuate-shaped panels 33, leakage of cooling air can occur therebetween, and therefore it is necessary to seal this gap. This is accomplished by way of a shiplap arrangement that is obtained by attaching small plates 43 that cover the gap 42 and extend in overlapping relationship over the adjacent arcuate-shaped panels 33. The plates 43 are preferably attached by welding or the like. Alternatively, the plates 43 could be produced by machining them from the solid segments.

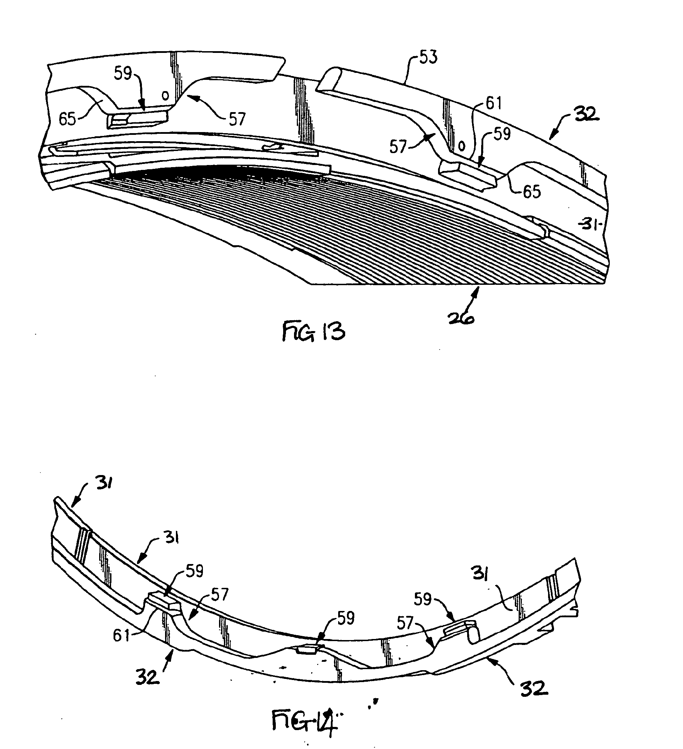

With reference to the preferred locking arrangement, as illustrated in Figs. 5-4, a preferred split retaining ring 32 is generally circular in form. The ring includes a body section 53 having a given thickness (t). The ring contains a split section 55 that is cut at an angle (Fig. 13) that allows the ring to be flexed outwardly when a sufficient outwardly directed force is applied to the ring. The ring is fabricated of a high strength metal having a resiliency such the ring wants to return to its initial unload condition once the flexing force is released. Many types of spring steel are available that provide both this type of high-strength and resiliency.

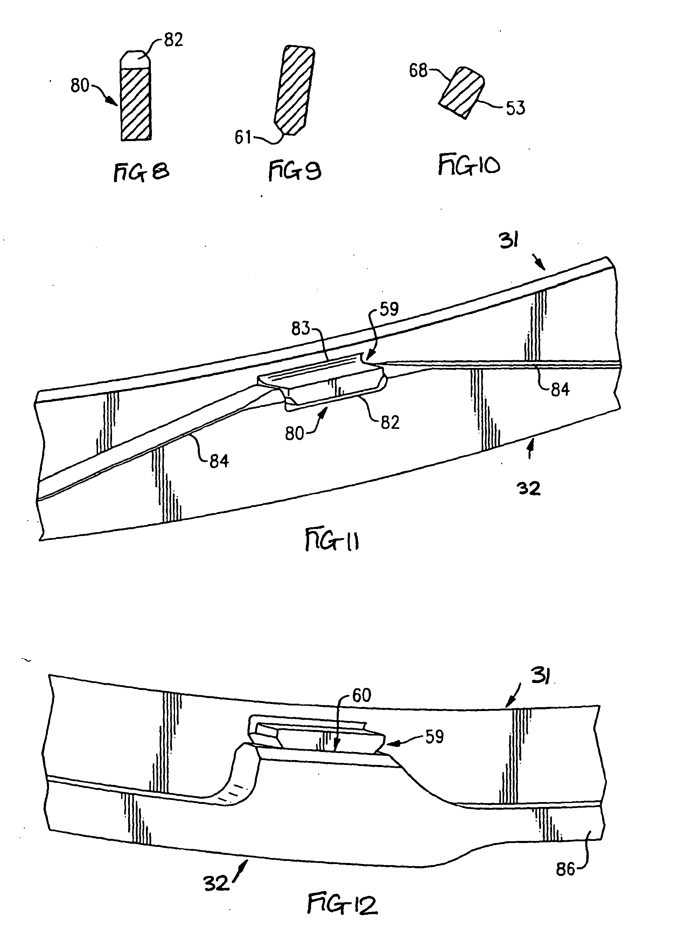

A series of lugs 57-57 are integrally located upon the inner surface 58 of the ring body. The lugs are circumferentially spaced about the ring body so that each lug on the ring can be seated upon one of a plurality of rib-like seats 59 formed on the flanges or ribs 37 that extend outwardly from each of the seal segments 31. The outer surfaces 60 on the ribs generally approximate a circle having a first diameter. The inner surfaces 61 of the lugs 57 generally approximate a second circle having a second diameter that is less than the first diameter approximated by the lugs when the ring is in an unloaded condition. Accordingly, the ring must be forced outwardly in order to seat the lugs upon the seats of the key segments as best illustrated in Figs. 11-14.

The body section of the ring is slidably contained within the radially disposed annular groove 22 formed in the turbine casing 11 and surrounds the seats on the seal segments 31 so that the ring can move radially in assembly as the lugs are mounted upon the seats. An inclined ramp 65 is located on either side of each lug. To assemble the ring upon the seats of the seal segments 31, the body of the ring is placed over the seat with the lugs being adjacent to the ribs. The ring is then rotated in the groove 22 to guide the seat over the inclined ramps associated with each lug forcing the ring outwardly in a radial direction until the seats are mounted upon the top of each of the lugs. Groove 22 is aligned with each of the locking segments such that side wall 68 of the ring is in contact with the outer wall 70 of each locking segment when the segments are in the locked position. As should now be evident, the expanded ring is now unable to move radially out of the groove 22 in the casing, and correspondingly, the key segments are unable to move axially out of the locking position. The seats on the seal segments 31 insure that the split ring will always be loaded radially in an outward direction to prevent the ring from moving inwardly. The ring as illustrated in Fig. 10 is split at an angle to provide a sufficient gap between the angled split surfaces so that thermal expansion of the ring will not produce any additional compressive loading on the ring during engine operation which might otherwise produce thermal jacking of the ring that might result in a premature failure of the ring. The ramp feature also allows the ring to be installed or removed in either a clockwise or a counterclockwise direction without the need of special tools.

A detent mechanism generally referenced 80 (Fig. 11) is furnished to prevent improper installation of the ring. The detent mechanism, as illustrated in Fig. 11, includes a raised platform located on the inside of the ring that is diametrically opposed from the split in the ring. A circumferentially extended recess 82 is located in the top surface of the platform and is dimensioned to snuggly receive therein a keeper 83 which is located on one of the seal segments. In practice, a seat as described in detail above may serve as the detent keeper. The detent platform again is furnished with an inclined ramp 84 on either side of seat which facilitates the guiding of the keeper into the recess 82 as the ring is rotated within groove 19. The ramps again allow the ring to be rotated in either direction during installation and removal and serve to minimize galling and wear on the detent mechanisms. The detent mechanism provides a positive tangential locking capability to the ring which resists thermal movement of the ring that might produce an unbalanced load resulting in the ring being fractured and requiring its replacement.

With further reference to Fig. 11, a section of the ring body 86 located on either side of the detent mechanism has a reduced thickness which allows the ring to adjust its position upon seats positioned on either side of the detent. This in turn facilitates proper positioning of the seats upon the lugs and allows for closure control over the ring's flexibility.

While the present invention has been particularly shown and described with reference to the preferred mode as illustrated in the drawing, it will be understood by one skilled in the art that various changes in detail may be effected therein without departing from the scope of the invention as defined by the claims.

## Claims

1. Apparatus comprising a turbine casing, an outer seal assembly of a turbine stage and an apparatus for securing said outer seal assembly (23) to said turbine casing (11) wherein said apparatus for securing comprises:
a plurality of radially outwardly extending arms (27) on said outer seal assembly, said arms (27) having a rear surface and a plurality of axially forwardly extending hanger elements (28); and
a mounting flange (13) formed on the inner side (18) of said casing (11) and having a radially inwardly extending leg (14) and an axially rearwardly extending leg (16) with a radially outer surface (19) which, together with the inner side (18) of said casing (11), forms a circumferential groove (17) for receiving said hanger elements (28) therein; **characterised in that** said apparatus for securing further comprises:
a plurality of arcuate elements (31) having an angle-shaped cross section and comprising a radially extending panel (33) with a plurality of axially forwardly extending hooks (34) adapted to be received in said circumferential groove (17) and having at least one axially forwardly extending flange (36) for engaging said arm rear surface of said outer seal assembly (23); and
a lock (32) for locking said outer seal assembly (23) and angle-shaped elements in their installed positions within said grooves (17).

2. Apparatus as set forth in claim 1 and further wherein said outer seal assembly arm rear surface includes at least one slot (38) for receiving said axially forwardly extending flange (36).

3. Apparatus as set forth in claim 1 or 2 wherein said arcuate elements (31) further include an axially rearwardly extending flange (37) for engaging with said locking means (32).

4. Apparatus as set forth in any preceding claim and further wherein said arcuate elements (31) include a radially outer edge (41) which engages an inner surface (18) of said casing (11) in a sealing relationship.

5. Apparatus as set forth in claim 4 wherein, when said outer seal assembly arm rear surface is urged rearwardly against said forwardly extending flange (36) of said arcuate element, the arcuate element is rotated in a counterclockwise direction with the radially outer surface (19) of said rearwardly extending leg (16) acting as a fulcrum, thereby resulting in the radially outer edge (41) of said arcuate element being biased against said casing inner surface (18).

6. Apparatus as set forth in claim 5 wherein said axially forwardly extending hooks (34) of said arcuate elements include a pad (39) for engaging said axially rearwardly extending leg (16) to thereby facilitate the rotational movement.

7. A method for securing an outer seal assembly (23) of a turbine rotor stage to the turbine casing comprising the steps of:
providing a plurality of radially outwardly extending arms (27) on said outer seal assembly, said arms having a rear surface and a plurality of axially forwardly extending hanger elements (28); and
providing a mounting flange (13) on the inner side of said casing (11) and having a radially inwardly extending leg (14) and an axially rearwardly extending leg (16) with a radially outer surface (19) which, together with the inner side of said casing (11), forms a circumferential groove (17) for receiving said hanger elements (28) therein; **characterised in that** said method further comprises:
providing a plurality of arcuate clements (31) having an angle-shaped cross section comprising a radially extending panel (33) with a plurality of axially forward extending hooks (34) adapted to be received in said circumferential groove (17) and having at least one axially forwardly extending flange (36) for engaging said arm rear surface of said outer seal assembly (23); and
locking said outer seal assembly (23) and said angle-shaped elements in their installed positions within said groove (17).

8. A method as set forth in claim 7 and including the step of providing a radially outer edge (41) on said arcuate element, with said radially outer edge (41) engaging an inner surface (18) of said casing (11) in a sealing relationship.

9. A method as set forth in claim 7 or 8 wherein said locking step is accomplished with a locking mechanism (32) disposed near the radially outer portion of said arcuate element such that, when the arm (27) rear surface is urged against the axially forwardly extending flange (36) of said arcuate elements (31), the arcuate element is allowed to rotate so as to thereby bias said radially outer edge (41) against said casing inner surface (18).

## Patentansprüche

1. Vorrichtung mit einem Turbinengehäuse, einer Außendichtungsanordnung einer Turbinenstufe und einer Vorrichtung zum Befestigen der Außendichtungsanordnung (23) an dem Turbinengehäuse (11), wobei die Vorrichtung zum Befestigen Folgendes aufweist:
eine Mehrzahl von sich radial nach außen erstreckenden Armen (27) an der Außendichtungsanordnung, wobei die Arme (27) eine rückwärtige Fläche und eine Mehrzahl von sich axial nach vorne erstreckenden Aufhängelementen (28) aufweisen; und
einen Befestigungsflansch (13), der an der Innenseite (18) des Gehäuses (11) gebildet ist und einen sich axial nach innen erstreckenden Schenkel (14) und einen sich axial nach hinten erstreckenden Schenkel (16) mit einer radial äußeren Fläche (19) aufweist, die zusammen mit der Innenseite (18) des Gehäuses (11) eine in Umfangsrichtung verlaufende Nut (17) zum Aufnehmen der Aufhängelemente (26) in dieser bildet:
**dadurch gekennzeichnet, dass** die Vorrichtung zum Befestigen ferner Folgendes aufweist:
eine Mehrzahl bogenförmiger Elemente (31) mit im Querschnitt winkeliger Ausbildung und mit einem in Radialrichtung verlaufenden Flächenkörper (33) mit einer Mehrzahl von sich axial nach vorne erstreckenden Haken (34), die für die Aufnahme in der in Umfangsrichtung verlaufenden Nut (17) ausgebildet sind und wenigstens einen sich axial nach vorne erstreckenden Flansch (36) zum Zusammenwirken mit der der rückwärtigen Armfläche der Außendichtungsanordnung (23) aufweisen; und
eine Verriegelung (32) zum Verriegeln der Außendichtungsanordnung (23) und der winkeligen Elemente in ihren montierten Positionen in den Nuten (17).

2. Vorrichtung nach Anspruch 1,
bei der weiterhin die rückwärtige Armfläche der Außendichtungsanordnung mindestens einen Schlitz (38) zum Aufnehmen des sich axial nach vorne erstreckenden Flansches (36) aufweist.

3. Vorrichtung nach Anspruch 1 oder 2,
wobei die bogenförmigen Elemente (31) weiterhin einen sich axial nach hinten erstreckenden Flansch (37) zum Zusammenwirken mit der Verriegelungseinrichtung (32) aufweisen.

4. Vorrichtung nach einem der vorausgehenden Ansprüche,
wobei die bogenförmigen Elemente (31) ferner einen radial äußeren Rand (41) aufweisen, der mit einer Innenfläche (18) des Gehäuses (11) in abdichtender Weise zusammenwirkt.

5. Vorrichtung nach Anspruch 4,
wobei dann, wenn die rückwärtige Armfläche der Außendichtungsanordnung nach hinten gegen den sich nach vorne erstreckenden Flansch (36) des bogenförmigen Elements gedrückt wird, das bogenförmige Element im Gegenuhrzeigersinn rotationsmäßig bewegt wird, wobei die radial äußere Fläche (19) des sich nach hinten erstreckenden Schenkels (16) als Schwenkpunkt wirkt, wobei der radial äußere Rand (41) des bogenförmigen Elements dadurch gegen die Gehäuse-Innenfläche (18) vorgespannt wird.

6. Vorrichtung nach Anspruch 5,
wobei die sich axial nach vorne erstreckenden Haken (34) der bogenförmigen Elemente eine Kontaktfläche (39) zum Zusammenwirken mit dem sich axial nach hinten erstreckenden Schenkel (16) aufweisen, um dadurch die Rotationsbewegung zu erleichtern.

7. Verfahren zum Befestigen einer Außendichtungsanordnung (23) einer Turbinenrotorstufe an dem Turbinengehäuse, wobei das Verfahren folgende Schritte aufweist:
Bereitstellen einer Mehrzahl von sich radial nach außen erstreckenden Armen (27) an der Außendichtungsanordnung, wobei die Arme eine rückwärtige Fläche und eine Mehrzahl von sich axial nach vorne erstreckenden Aufhängelementen (28) aufweisen; und
Bereitstellen eines Befestigungsflansches (13) an der Innenseite des Gehäuses (11), wobei der Befestigungsflansch einen sich axial nach innen erstreckenden Schenkel (14) und einen sich axial nach hinten erstreckenden Schenkel (16) mit einer radial äußeren Fläche (19) aufweist, die zusammen mit der Innenseite des Gehäuses (11) eine in Umfangsrichtung verlaufende Nut (17) zum Aufnehmen der Aufhängelemente (28) in dieser bilden;
**dadurch gekennzeichnet, dass** das Verfahren ferner folgende Schritte aufweist:
Bereitstellen einer Mehrzahl bogenförmiger Elemente (31) mit im Querschnitt winkeliger Ausbildung und mit einem in Radialrichtung verlaufenden Flächenkörper (33) mit einer Mehrzahl von sich axial nach vorne erstreckenden Haken (34), die für die Aufnahme in der in Umfangsrichtung verlaufenden Nut (17) ausgebildet sind und wenigstens einen sich axial nach vorne erstreckenden Flansch (36) zum Zusammenwirken mit der rückwärtigen Armfläche der Außendichtungsanordnung (23) aufweisen; und
Verriegeln (32) der Außendichtungsanordnung (23) und der winkeligen Elemente in ihren montierten Positionen in der Nut (17).

8. Verfahren nach Anspruch 7,
das den Schritt der Bereitstellung eines radial äußeren Rands (41) an dem bogenförmigen Element beinhaltet, wobei der radial äußere Rand (41) mit einer Innenfläche (18) des Gehäuses (11) in abdichtender Weise zusammenwirkt.

9. Verfahren nach Anspruch 7 oder 8,
wobei der Verriegelungsschritt mittels eines Verriegelungsmechanismus (32) erzielt wird, der in der Nähe des radial äußeren Bereichs des bogenförmigen Elements angeordnet ist, so dass dann, wenn die rückwärtige Fläche des Arms (27) gegen den sich axial nach vorne erstreckenden Flansch (36) des bogenförmigen Elements (31) gedrückt wird, das bogenförmige Element eine Rotationsbewegung ausführen kann und dadurch der radial äußere Rand (41) gegen die Gehäuse-Innenfläche (18) vorgespannt wird.

## Revendications

1. Appareil comprenant un carter de turbine, un ensemble de joint externe d'étage de turbine et un appareil pour fixer ledit ensemble de joint externe (23) audit carter de turbine (11), ledit appareil de fixation comprenant :
une pluralité de bras (27) s'étendant radialement vers l'extérieur sur ledit ensemble de joint externe, lesdits bras (27) ayant une surface arrière et une pluralité d'éléments d'accrochage (28) s'étendant axialement vers l'avant ; et
une bride de montage (13) formée sur le côté interne (18) dudit carter (11) et ayant une portion (14) s'étendant radialement vers l'intérieur et une portion (16) s'étendant axialement vers l'arrière, avec une surface radialement externe (19) qui, conjointement avec le côté interne (18) dudit carter (11), forme une gorge circonférentielle (17) destinée à recevoir lesdits éléments d'accrochage (28) ; **caractérisé en ce que** ledit appareil de fixation comprend en outre :
une pluralité d'éléments arqués (31) ayant une section transversale en forme de coin et comprenant un panneau (33) s'étendant radialement avec une pluralité de crochets (34) s'étendant axialement vers l'avant, prévus pour être reçus dans ladite gorge circonférentielle (17) et ayant au moins une bride (36) s'étendant axialement vers
l'avant pour s'engager avec ladite surface arrière de bras dudit ensemble de joint externe (23) ; et
un verrou (32) pour verrouiller ledit ensemble de joint externe (23) et lesdits éléments en forme de coin dans leurs positions installées dans lesdites gorges (17).

2. Appareil selon la revendication 1, et dans lequel en outre ladite surface arrière de bras de l'ensemble de joint externe comporte au moins une fente (38) pour recevoir ladite bride (36) s'étendant axialement vers l'avant.

3. Appareil selon la revendication 1 ou 2, dans lequel lesdits éléments arqués (31) comportent en outre une bride (37) s'étendant axialement vers l'arrière pour s'engager avec ledit moyen de verrouillage (32).

4. Appareil selon l'une quelconque des revendications précédentes, et dans lequel en outre lesdits éléments arqués (31) comportent un bord radialement externe (41) qui s'engage avec une surface interne (18) dudit carter (11) de manière hermétique.

5. Appareil selon la revendication 4, dans lequel, lorsque ladite surface arrière de bras de l'ensemble de joint externe est poussée vers l'arrière contre ladite bride (36) s'étendant vers l'avant dudit élément arqué, l'élément arqué est tourné dans un sens antihoraire avec la surface radialement externe (19) de ladite portion (16) s'étendant axialement vers l'arrière agissant en tant que pivot, ce qui entraîne que le bord radialement externe (41) dudit élément arqué est sollicité contre ladite surface interne (18) du carter.

6. Appareil selon la revendication 5, dans lequel lesdits crochets (34) s'étendant axialement vers l'avant desdits éléments arqués comportent une plage (39) destinée à s'engager avec ladite portion (16) s'étendant axialement vers l'arrière pour ainsi faciliter le mouvement de rotation.

7. Procédé pour fixer un ensemble de joint externe (23) d'un étage de rotor de turbine au carter de turbine, comprenant les étapes consistant à :
fournir une pluralité de bras (27) s'étendant radialement vers l'extérieur sur ledit ensemble de joint externe, lesdits bras ayant une surface arrière et une pluralité d'éléments d'accrochage (28) s'étendant axialement vers l'avant ; et fournir une bride de montage (13) sur le côté interne dudit carter (11) et ayant une portion (14) s'étendant radialement vers l'intérieur et une portion (16) s'étendant axialement vers l'arrière, avec une surface (19) radialement externe qui, conjointement avec le côté interne dudit carter (11), forme une gorge circonférentielle (17) destinée à recevoir lesdits éléments d'accrochage (28) ; **caractérisé en ce que** ledit procédé comprend en outre les étapes suivantes :
fournir une pluralité d'éléments arqués (31) ayant une section transversale en forme de coin comprenant un panneau (33) s'étendant radialement avec une pluralité de crochets (34) s'étendant axialement vers l'avant, prévus pour être reçus dans ladite gorge circonférentielle (17) et ayant au moins une bride (26) s'étendant axialement vers l'avant pour s'engager avec ladite surface arrière de bras dudit ensemble de joint externe (23) ; et verrouiller ledit ensemble de joint externe (23) et lesdits éléments en forme de coin dans leurs positions installées dans ladite gorge (17).

8. Procédé selon la revendication 7, comportant l'étape consistant à fournir un bord radialement externe (41) sur ledit élément arqué, ledit bord radialement externe (41) s'engageant avec une surface interne (18) dudit carter (11) de manière hermétique.

9. Procédé selon la revendication 7 ou 8, dans lequel ladite étape de verrouillage est mise en oeuvre avec un mécanisme de verrouillage (32) disposé à proximité de la portion radialement externe dudit élément arqué de telle sorte que lorsque la surface arrière du bras (27) est poussée contre la bride (36), s'étendant axialement vers l'avant, desdits éléments arqués (31), l'élément arqué puisse tourner de manière à ainsi solliciter ledit bord radialement externe (41) contre ladite surface interne (18) du carter.
